# EUROPÄISCHE PATENTSCHRIFT

(11) **EP 1 178 444 B1**
(45) Veröffentlichungstag und Bekanntmachung des Hinweises auf die Patenterteilung: **03.03.2004**
(21) Anmeldenummer: 00116631.3
(22) Anmeldetag: 01.08.2000
(51) Int. Cl.: G07F 7/10, G07F 19/00

(54) **Elektronischer Zahlungsverkehr mit SMS**
Electronic payment using SMS
Paiement électronique utilisant des SMS

(43) Veröffentlichungstag der Anmeldung: 06.02.2002
(73) Patentinhaber: mega-tel AG, 3073 Gümlingen (CH)
(72) Erfinder: Chappuis, Pierre, c/o mega-tel AG, 3073 Gümlingen (CH)
(74) Vertreter: Rupp, Christian, Dipl.Phys.

(56) Entgegenhaltungen:
- EP-A- 0 986 275
- WO-A-00/31699
- WO-A-96/25828
- WO-A-98/18251
- WO-A-98/47116

## Beschreibung

Die vorliegende Erfindung bezieht sich auf ein Verfahren zur Abwicklung des elektronischen Zahlungsverkehrs unter Zuhilfenahme eines Mobilterminals, auf ein Software-Programm zur Ausführung eines solchen Verfahrens.

Der Hintergrund der vorliegenden Erfindung ist die in letzter Zeit sich stark verbreitende Idee, beispielsweise ein Mobiltelefon als Zahlungsmittel und insbesondere als Kreditkartenersatz zu verwenden.

Die Verwendung von Kreditkarten als Zahlungsmittel führt dazu, daß heute Informationen über den Kreditkarteninhaber auf der Kopie des Beleges beim Vertragsunternehmen zurückbleiben. Mit diesen Informationen ist es heute nicht auszuschließen, daß Unberechtigte in die Lage versetzt werden, Einkäufe über das Internet zu tätigen und die Bezahlung über die mißbräuchlich verwendete Kreditkarte auszulösen, resp. auszuführen.

Die auf der Kreditkarte vorhandenen Informationen sind folgendermaßen aufgebaut:
- Kreditkartenunternehmen
- Name und Vorname des Kreditkarteninhabers
- Kreditlimite ersichtlich über Farbgebung, resp. Kartenbezeichnung
- Kreditkartennummer (16-stellig)
- Verfalldatum
- Unterschrift des Kreditkarteninhabers
- Magnetstreifen mit PIN-Code zum Barbezug am Automaten
- Neu mit Foto des Karteninhabers auf der Rückseite

Durch die Einführung des Fotos auf der Rückseite ist zwar die Sicherheitsstufe erhöht worden, um Mißbräuche mit gestohlenen Kreditkarten zu reduzieren, sofern die Kreditkarte bei der Bezahlung an das Vertragsunternehmen übergeben wird, um die Zahlung auszuführen, indem diese durch einen Leser geführt oder ein Abzug auf mechanischem Weg gemacht wird.

Jede Zahlung mit Kreditkarte hinterläßt einen Beleg, auf dem die wichtigsten Merkmale unverschlüsselt ersichtlich sind, nämlich
- Kreditkartenunternehmen, resp. Verrechnungspartner
- Nummer des Karteninhabers
- Name und Vorname des Kreditkarteninhabers
- Verfalldatum
- Unterschrift des Karteninhabers

Von der Firma paybox.net AG (Internetadresse: www.paybox.net) ist dabei ein System für den Zahlungsverkehr vorgestellt worden, das es Endkunden ermöglicht, mit ihrem Mobiltelefon Zahlungen im Internet, im stationären Einzelhandel, an mobile Dienstleister und untereinander durchzuführen. Zur Durchführung einer Zahlung ruft dabei der Händler die gebührenfreie Nummer der Firma paybox an. Danach wird er nach dem Betrag und der Mobiltelefonnummer des Kunden gefragt. Diese Daten müssen dann von dem Händler über eine Tastatur eingegeben werden. Schließlich ruft die Firma paybox den Kunden an und läßt sich die Zahlung von ihm autorisieren. Abschließend wird den Transaktionszahlern die erfolgreiche Zahlung bestätigt. Die Kommunikation zwischen dem Händler, der den Zahlungsauftrag ausgeben möchte, und der Zentrale für die Abwicklung des Zahlungsverkehrs erfolgt also über einen Verkehrskanal einer Telefonleitung.

Daraus ergibt sich der Nachteil, daß dieser Verkehrskanal blockiert, gestört oder sonstwie nicht erfolgreich benutzbar sein kann. Darüber hinaus ist das bekannte System nicht dazu eingerichtet, Zahlungen mittels eines Kreditkartenkontos auszuführen.

Aus der internationalen Anmeldung WO 00/31699 ist ein Verfahren zur Durchführung elektronischer Transaktionen bekannt. Dabei ist vorgesehen, dass ein Benutzer mit einem Mobiltelefon eine Transaktions-Anfrage an eine Vermittlungsstelle sendet und von dieser nach Überprüfung der relevanten Daten die Transaktions-Anfrage an einen entsprechenden Zahlungsempfänger weitergeleitet wird. Die Übertragungen erfolgen dabei über eine Luftschnittstelle in verschlüsselter Form. Eine Aushändigung der Kreditkarten-Daten an den Zahlungsempfänger kann jedoch mit diesem Verfahren nicht ausgeschlossen werden.

Ausgehend von diesem genannten Stand der Technik ist es Aufgabe der vorliegenden Erfindung, ein System für den elektronischen Zahlungsverkehr bereitzustellen, das eine sichere Kommunikation zwischen dem Zahlungsauftraggeber und einer Zahlungs-Abwicklungszentrale erlaubt. Darüber hinaus soll das System auch für Zahlungen mittels Kreditkarten-Konten ausgelegt sein.

Gemäß der Erfindung wird diese Aufgabe durch die Merkmale der unabhängigen Ansprüche gelöst. Die abhängigen Ansprüche bilden den zentralen Gedanken der vorliegenden Erfindung in besonders vorteilhafter Weise weiter.

Erfindungsgemäß ist also ein Verfahren zur Abwicklung des elektronischen Zahlungsverkehrs unter Zuhilfenahme eines Mobilterminals, wie beispielsweise eines Mobiltelefons, vorgesehen. Dabei wird zuerst eine Zahlungsanfrage von dem Mobilterminal zu einer Zahlungs-Abwicklungszentrale übersandt. Gleichzeitig oder nach Übersendung der Zahlungsanfrage werden die Zahlungsmodalitäten von dem Mobilterminal zu der Zahlungs-Abwicklungszentrale übersandt. Die Zahlungsmodalitäten können beispielsweise den Zahlungsadressaten, die Nummer der zu verwendenden Kreditkarte, den Zahlungsbetrag, etc. umfassen. Schließlich wird die Zahlungsabwicklung insbesondere gegenüber beiden Teilnehmern des elektronischen Zahlungsverkehrs bestätigt und jeder Zahlungsabwicklung ein individueller Transaktionscode oder Freigabecode zugewiesen. Dieser Transaktionscode oder Freigabecode wird zu dem Terminal eines Zahlungsadressaten übermittelt, wodurch die Kreditkarten-Nummer an dem Terminal des Zahlungsadressaten für die Ausführung der Zahlungstransaktion nicht vorliegt. Die Kommunikation zwischen dem Mobilterminal und der Zahlungs-Abwicklungszentrale erfolgt dabei zumindest teilweise (zeitlich und/oder streckenmäßig betrachtet) über einen Datenkanal oder einen Signalisierungskanal einer Luftschnittstelle. Die Datenkanäle oder Signalisierungskanäle bekannter Luftschnittstellen, wie beispielsweise des GSM-Standards, haben den Vorteil gegenüber den Verkehrskanälen, daß sie die schnellste und stabilste Art der Verbindung darstellen. Darüber hinaus läßt sich die Kommunikation über einen Datenkanal oder einen Signalisierungskanal gut verschlüsseln, so daß die übermittelten Daten nur schwerlich von unbefugten Dritten abgegriffen werden können.

Die Kommunikation zwischen dem Mobilterminal und der Zahlungs-Abwicklungszentrale kann dabei zumindest teilweise (zeitlich und/oder streckenmäßig betrachtet) mittels des sogenannten SMS(Short Message Service)-Dienstes des GSM-Standards erfolgen. Der SMS (Short Messate Service, Kurznachrichten-Dienst) erlaubt es einem mobilen Teilnehmer, im GSM-Standard Nachrichten mit einer Länge von 160 Zeichen zu übermitteln. Die Übermittlung erfolgt dabei mittels eines sogenannten Short Message Service Center (SMS-Center) des Mobilfunkbetreibers. Im SMS-Center können Nachrichten zwischengespeichert und dann an die Mobilteilnehmer weitergeleitet werden. Dabei wird die Nachricht auf freier Kapazität im Signalisierungskanal übertragen und belegt somit auch keine Kapazitäten in den Verkehrskanälen. Beim Empfänger kann die Nachricht auf der sogenannten SIM-Karte (Subscriber Identity Module) gespeichert werden. Auf der SIM-Karte ist Speicherplatz für bspw. 10 Kurznachrichten zu je 160 Zeichen reserviert. Der Mobilteilnehmer hat daher die Möglichkeit, Kurznachrichten über die Tastatur der Mobilstation einzugeben und über das SMS-Center an andere Teilnehmer abzusenden. Ist ein Empfänger im Mobilfunknetz vorübergehend nicht erreichbar, wird die Kurznachricht im SMS-Center gespeichert und erst dann ausgesendet, wenn sich der Teilnehmer mit seiner SIM im Mobilfunknetz wieder einbucht.

Die Kommunikation zwischen dem Mobilterminal und der Zahlungs-Abwicklungszentrale kann dabei unter Verwendung von Daten erfolgen, die aus einem Speicher (beispielsweise der SIM-Karte) in dem Mobilterminal ausgelesen werden.

Die Zahlungsmodalitäten können Kreditkarten-Informationen enthalten.

Die Kreditkarten-Informationen werden dabei dem Zahlungsadressaten nicht zugänglich gemacht, vielmehr werden die Kreditkarten-Informationen nur in verschlüsselter Form von dem Mobilterminal zu einer Rechenzentrale zur Zahlungabwicklung übermittelt.

Die Kreditkarten-Informationen können entweder manuell in das Mobilterminal eingegeben werden oder automatisch aus der SIM-Karte ausgelesen werden.

Nach einer erfolgreichen Zahlungsabwicklung können die Informationen bezüglich der erfolgten Zahlungstransaktion in einem Speicher, insbesondere der SIM-Karte, des Mobilterminals abgelegt werden.

Die Transaktions-Informationen können dann durch einen autorisierten Benutzer des Mobilterminals ausgelesen und/oder zu einem anderen Gerät (Home-PC) übertragen werden.

Die Bestätigung der Zahlungsabwicklung kann zu einem Kassenterminal ausgegeben werden, so daß die dort befindliche Kassiererin über die erfolgreiche Zahlungsabwicklung informiert ist.

Jeder Zahlungsabwicklung kann ein individueller Transaktionscode zugewiesen werden, der zu dem Mobilterminal und/oder dem Zahlungsadressaten von der Rechenzentrale aus zur Zahlungsabwicklung übermittelt wird.

Die Übermittlung des Transaktionscodes durch die Rechenzentrale zur Zahlungsabwicklung kann gleichzeitig die Freigabe der Zahlungsabwicklung darstellen, so daß beide Teilnehmer des elektronischen Zahlungsverkehrs darüber informiert werden, daß die Zahlung erfolgreich abgewickelt wurde.

Gemäß einem weiteren Aspekt der vorliegenden Erfindung ist ein Software-Programm zur Implementierung eines solchen Verfahrens vorgesehen.

Weitere Merkmale, Vorteile und Eigenschaften der vorliegenden Erfindung werden aus der folgenden Beschreibung von Ausführungsbeispielen unter Bezugnahme auf die Figuren der begleitenden Zeichnungen näher ersichtlich.
Figur 1 zeigt dabei ein System für den elektronischen Zahlungsverkehr unter Verwendung eines Mobilterminal gemäß der vorliegenden Erfindung,
Figur 2 zeigt ein Ablaufschema für die Interaktion zwischen einem eigenen Mobiltelefon und einem Kassenterminal,
Figur 3 zeigt den Zahlungsvorgang für den Fall der Verwendung des eigenen Mobiltelefons und des Kassenterminals,
Figur 4 zeigt die Anzeige, die beim Zahlungsvorgang auf dem Display eines Kassenterminals erscheint,
Figur 5 zeigt das Ablaufschema und das Display des Mobiltelefons für den Fall der Verwendung eines Mobiltelefons eines Vertragsunternehmens,
Figur 6 zeigt das Display eines Mobiltelefons während des Zahlungsvorgangs mit einem Mobiltelefon eines Vertragsunternehmens,
Figur 7 zeigt das Display eines Mobiltelefons und eines Personal Computers (PC) im Abrechnungsmodus,
Figur 8 zeigt ein Ablaufschema für das Display eines Mobiltelefons für einen Zahlungsvorgang mit dem eigenen Mobiltelefon oder einem Kassenterminal für den Fall einer zeitverzögerten Zahlung (Einchecken im Hotel), und
Figur 9 zeigt ein Ablaufschema für das Display eines Kassenterminals für einen Zahlungsvorgang mit dem eigenen Mobiltelefon oder einem Kassenterminal für den Fall einer zeitverzögerten Zahlung (Einchecken im Hotel).

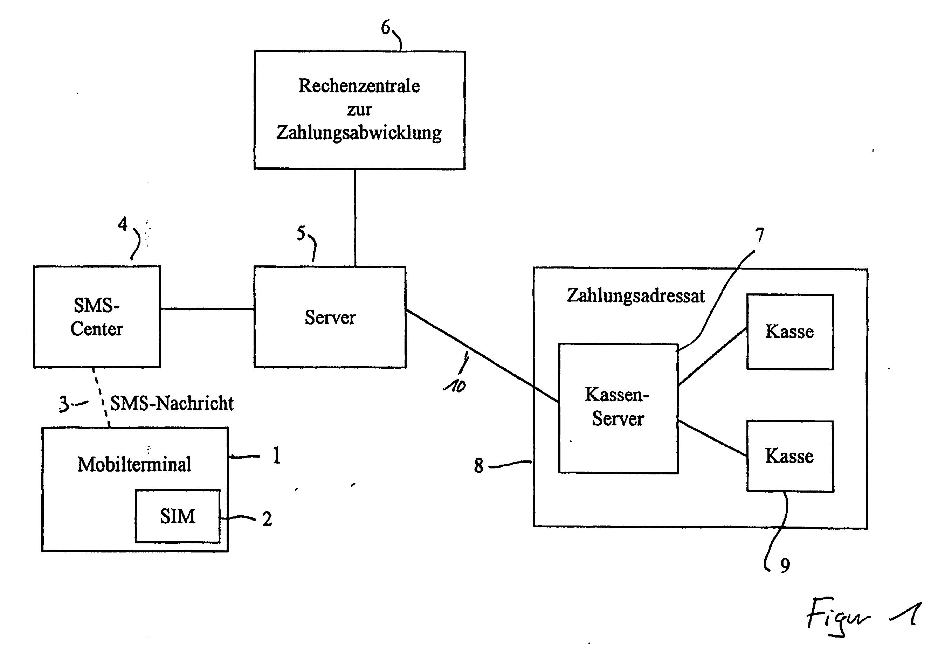

Bezugnehmend auf Figur 1 soll zuerst ein System erläutert werden, wie es bei der vorliegenden Erfindung Anwendung finden kann. Gemäß dem Szenario ist vorausgesetzt, daß ein Kunde mit einem Mobilterminal, insbesondere mit einem Mobiltelefon 1 an einem Kassenterminal 9 eines Zahlungsadressaten (beispielsweise ein Supermarkt oder dergleichen) zahlen möchte. Diese Zahlung soll elektronisch über ein Konto erfolgen, dem eine bestimmte Kreditkarte des Kunden zugeordnet ist.

Das Mobilterminal (Mobiltelefon) 1 des Benutzers weist eine bekannte SIM-Karte 2 auf, die eine Speicherfunktion hat. Mit dem Mobiltelefon 1 und der SIM-Karte 2 kann der Benutzer SMS-Nachrichten über eine Luftschnittstelle 3 mit einem SMS-Center 4 austauschen. Dieser Austausch über die Luftschnittstelle 3 erfolgt im dargestellten Ausführungsbeispiel mittels des GSM-Standards.

Da für die vorliegende Erfindung nur ein Daten- oder Signalisierungskanal notwendig ist, kann das Mobilterminal auch derart ausgeführt sein, dass es nur SMS-Nachrichten senden und empfangen kann, aber nicht für den Aufbau eines Verkehrskanals (Sprachkanals) ausgestattet ist.

Das SMS-Center 4, das bspw. von einem Netzbetreiber verwaltet wird, ist mit einem Server 5 verbunden, der einerseits mit einer Rechenzentrale zur Zahlungsabwicklung per Kreditkarte (Clearing-Stelle) 6 und andererseits mit dem Zahlungsadressaten 7 mittels einer Datenleitung 10 verbunden ist. Der Server 5 kann funktionell und auch geographisch mit der Rechenzentrale zur Zahlungsabwicklung 6 vereinheitlicht sein.

Genauer gesagt steht der Server 5 mit einem Kassenserver 7 des Zahlungsadressaten 7 in Verbindung, wobei der Kassenserver 7 wiederum mit den verschiedenen Kassenterminal 9 des Zahlungsadressaten 8 verbunden ist.

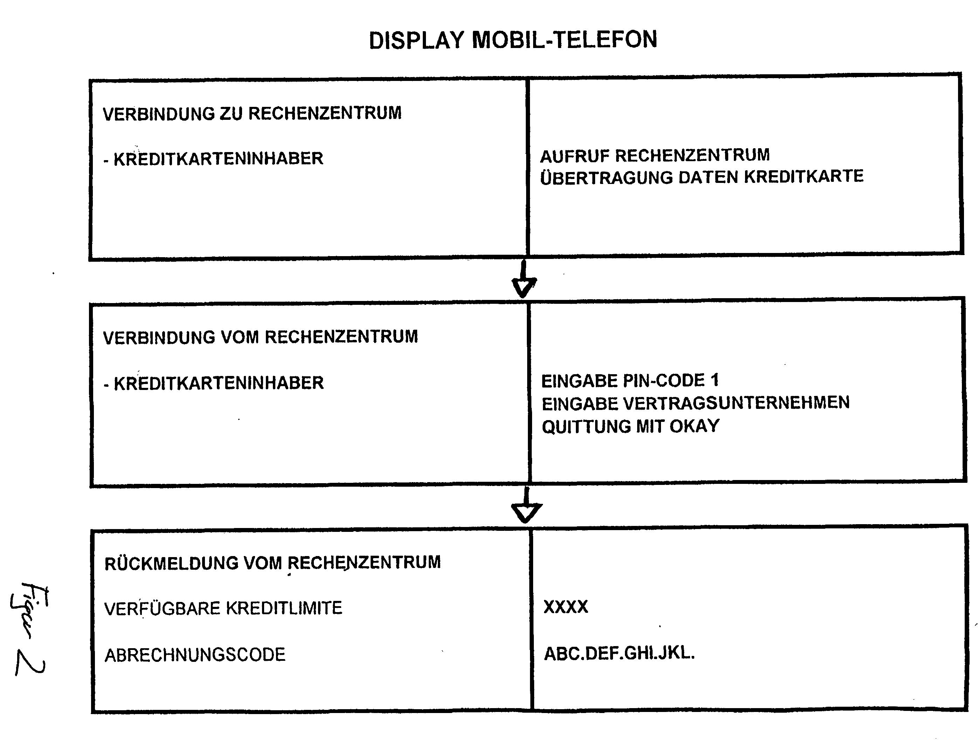

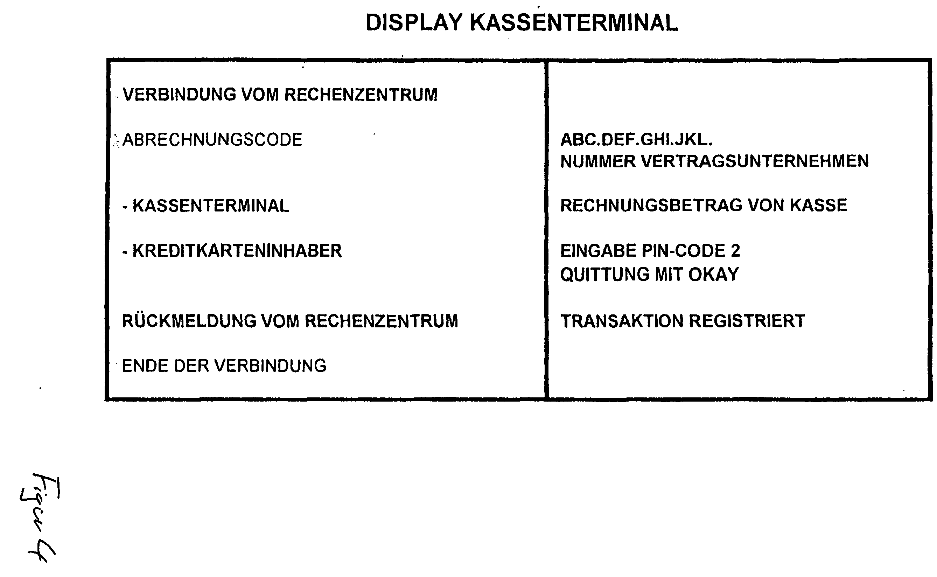

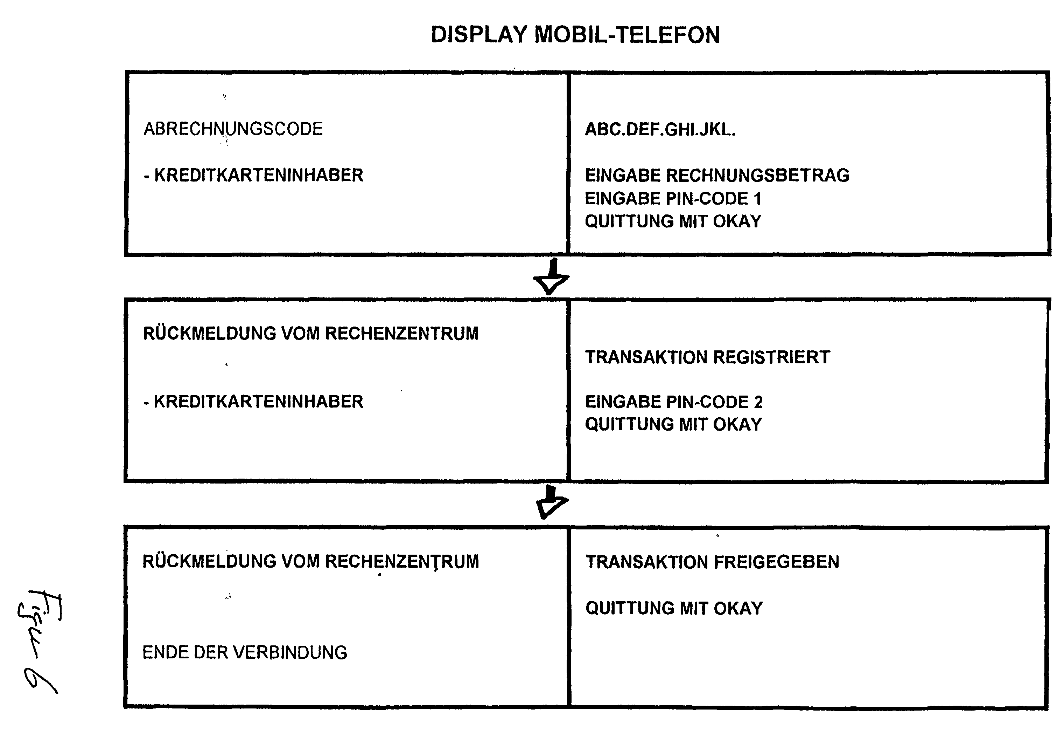

Unter Bezugnahme auf die Figuren 2 bis 7 soll nunmehr der Funktionsablauf bei der vorliegenden Erfindung erläutert werden:

Um dieses Lösungskonzept zu realisieren, bedarf es folgender Komponenten und Elemente:
- Kreditkarte
- Kreditkartennummer
- Verfügbare und durch das Rechenzentrum (Abrechnungszentrale) aktualisierte Kreditlimite
- PIN-Code
- Transaktionscode, bzw. Approbations-Code des Verrechnungszentrums
- Mobil-Telefon mit Spezialsoftware

Hardwareseitig wird entweder das eigene oder das vor Ort zur Verfügung stehende Mobiltelefon (hauptsächlich das Mobiltelefon des Kunden) eingesetzt, dessen SIM-Speicher so gepflegt werden kann, daß er folgende Leistungen erbringt:
- beim eigenen Mobiltelefon werden die relevanten Informationen direkt mittels Kurzaufruf aus dem Speicher gelesen und die Verbindung zum entsprechenden Kreditkartenunternehmen, resp. Rechenzentrum hergestellt, nämlich:
   - Identifikation Kreditkarteninhaber
   - Kreditkartennummer
   - Verfalldatum

Die Kommunikationskosten gehen zulasten des Kreditkarteninhabers oder des Vertragsunternehmens.
- beim lokalen Mobiltelefon des Vertragsuntemehmens (Zahlungsadressaten) werden die relevanten Informationen direkt aus dem SIM-Speicher gelesen und die Verbindung zum Kreditkartenuntemehmen, resp. Rechenzentrum hergestellt, nämlich:
   - Nummer des Vertragsunternehmens

Die Kommunikationskosten gehen zulasten des Vertragsunternehmens.

Aus Sicherheitsgründen bietet sich heute für die Transaktionen und die Kommunikation zwischen den Vertragsunternehmen und Kreditkarteninhaber die SMS-Plattform an.

### Zahlung mit eigenem Mobiltelefon des Kreditkarteninhabers

### Zahlung gegen Beleg

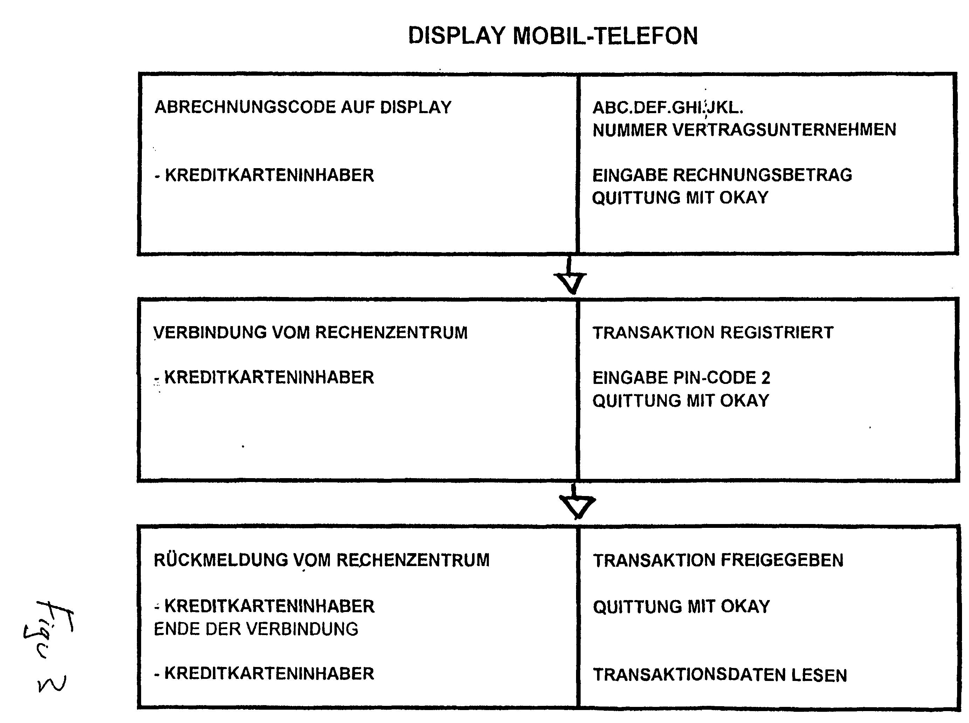

Bei der Zahlung mit dem eigenen Mobiltelefon wie in Figuren 2, 3, und 4 dargestellt ist folgender Ablauf vorgeschrieben:
- Über die Wahl der Telefonnummer des Rechenzentrums (Abwicklungszentrale) aus dem integriertem SIM-Speicher sendet das Mobiltelefon per SMS-Nachricht die Kreditkartennummer des Kreditkarteninhabers an Kreditkartenunternehmen, resp. Rechenzentrum (Figur 2)
- Die Verbindung kommt zustande und verlangt Eingabe des PIN-Codes durch Kreditkarteninhaber sowie der Nummer des Vertragsunternehmens (Figur 2) auf der Tastatur des Mobiltelefons,
- Überprüfung der eingegebenen Daten durch das Rechenzentrum und Freigabe der Informationen an den Kreditkarteninhaber
- Das Rechenzentrum (Kreditkartenunternehmen) sendet dann folgende Informationen an das Mobiltelefon zurück, wo sie auf dem Display angezeigt werden (Figur 2):
   - Verfügbare und durch das Rechenzentrum aktualisierte Kreditlimite des Karteninhabers
   - Transaktionscode 12-stellig (alpha-numerisch) als Bezahlungs-Freigabe, der anschließend auf den Beleg des Zahlungsadressaten (Vertragsunternehmen des Rechenzentrums) als Abrechnungsgrundlage übertragen wird. Die ersten 2 Stellen des Transaktionscodes können für die Identifikation des Rechenzentrums dienen
- Der Kunde und Kreditkarteninhaber quittiert auf seinem Mobiltelefon die Nummer des Vertragsunternehmens, tippt den Rechnungsbetrag auf sein Mobiltelefon ein und sendet diese Informationen an das Rechenzentrum zurück (Figur 3)
- Alternativ wäre auch die zweite Eingabe des PIN-Codes oder die Eingabe eines weiteren PIN-Codes als zusätzliches Sicherheitsmerkmal denkbar und möglich
- Abschluss durch Rückmeldung des Kreditkartenunternehmens, resp. Rechenzentrums an das Mobiltelefon des Kunden, und Quittieren der Transaktion mit OK (Figur 3) durch den Kunden auf dem Mobiltelefon,
- Trennen der Verbindung.

Die Kommunikationskosten der Transaktion gehen zulasten des Kreditkarteninhabers oder des Vertragsunternehmens, sofern keine gebührenfreie Nummer eingesetzt werden kann.

Mit dieser Vorgehensweise wird verhindert, daß die Nummer des Kreditkarteninhabers jemals an das Vertragsunternehmen bekannt gegeben wird und eine weitere Verwendung dieser Informationen für Unberechtigte ausschließt, beispielsweise für missbräuchliche Einkäufe über das Internet, die lediglich diese Schlüsselinformationen zur Abwicklung benötigt.

Interessant ist diese Applikation insofern, als die Transaktionsinformationen auf dem SIM-Speicher abgelegt werden können und mittels IR oder Auslesegerät in den eigenen PC eingelesen, resp. übertragen, werden können. Dabei handelt es sich um die folgenden Informationen:
- Datum und Uhrzeit der Transaktion
- Nummer des Vertragsunternehmens
- Freigabe-Code des Kreditkartenunternehmens, resp. des Rechenzentrums
- Eingegebener Rechnungsbetrag.

### Zahlung über eigenes Mobiltelefon, resp. Kassenterminal des Vertragsunternehmens

Diese Applikation ist von Bedeutung, da Großverteiler mit Kassenterminals heute bedauern, daß nur ein Bruchteil der Einkäufe mittels bargeldlosem Zahlungsverkehr abgewickelt werden. Der Hauptgrund liegt nach Aussagen der Verantwortlichen an der zu langen Transaktionszeit, die heute bei ca. 30 Sekunden liegen würde.

Gemäß der Erfindung wird es dem Kunden ermöglicht, die Zahlungstransaktion vorzubereiten, während er noch in der Schlange vor der Kasse steht und genügend Zeit zur Verfügung hat, um die entsprechende Kommunikation aufzubauen.

Bei der Zahlung mit dem eigenen Mobiltelefon ist daher folgender Ablauf zwingend vorgesehen:
- Über die Wahl der Telefonnummer des Rechenzentrums ans dem integrierten SIM-Speicher sendet das Mobiltelefon die Kreditkartennummer des Kreditkarteninhabers an das Kreditkartenunternehmen, resp. Rechenzentrum
- Die Verbindung kommt zustande und das Rechenzentrum verlangt an dem Mobiltelefon die Eingabe des PIN-Codes durch Kreditkarteninhaber sowie der Nummer des Vertragsunternehmens, resp. des Kassenterminals, an welchem die Zahlungstransaktion durchgeführt wird (diese Nummer wird an jeder Kasse groß sichtbar aufgezeigt)
- Überprüfung der eingegebenen Daten und Freigabe der Informationen an den Kreditkarteninhaber
- Kreditkartenunternehmen sendet dann folgende Informationen zurück und zeigt diese auf dem Display des Mobiltelefons des Kreditkarteninhabers an
   - Verfügbare und aktualisierte Kreditlimite des Karteninhabers
   - Transaktionscode 12-stellig (alpha-numerisch) als Bezahlungs-Freigabe
- Kreditkartenunternehmen sendet dann zusätzlich folgende Informationen an das Kassenterminal des Vertragsunternehmens
   - Gleichzeitige Sendung des Transaktionscodes 12-stellig (alpha-numerisch) als Bezahlungsfreigabe auf das Display des Vertragsunternehmens, resp. des Kassenterminals (aber vor allem ohne Kreditkartennummer oder Name des Kreditkarteninhabers)
   - Auf dem Display des Kassenterminals erscheint ebenfalls der Rechnungsbetrag direkt von der Kasse generiert
- VARIANTE A: Der Kreditkarteninhaber quittiert die Nummer des Vertragsunternehmens und tippt den Rechnungsbetrag auf sein Mobiltelefon ein und sendet diese Informationen an das Rechenzentrum zurück mit OK
- VARIANTE B: Alternativ kann dieser Vorgang aber auch über das Kassenterminal erfolgen durch Eingabe des PIN-Codes + OK.
- Alternativ wäre auch die zweite Eingabe eines PIN-Codes als zusätzliches Sicherheitsmerkmal denkbar und möglich
- Abschluss durch Rückmeldung des Kreditkartenunternehmens, resp. Rechenzentrums und quittieren der Transaktion mit OK auf dem Mobiltelefon und/oder dem Kassenterminal
- Trennen der Verbindung.

Die Kommunikationskosten der Transaktion gehen wiederum zu Lasten des Kreditkarteninhabers oder des Vertragsunternehmens, sofern keine gebührenfreie Nummer eingesetzt werden kann.

Mit dieser Vorgehensweise wird verhindert, dass die Nummer des Kreditkarteninhabers jemals an das Vertragsunternehmen bekannt gegeben wird und eine weitere Verwendung dieser Informationen für Unberechtigte ausschließt, beispielsweise für missbräuchliche Einkäufe über das Internet, die lediglich diese Schlüsselinformationen zur Abwicklung benötigt.

Interessant ist diese Applikation insofern, als die Transaktionsinformationen auf dem SIM-Speicher abgelegt werden können und mittels IR oder Leser in den eigenen PC eingelesen, resp. übertragen werden können. Dabei handelt es sich um die folgenden Informationen:
- Datum und Uhrzeit der Transaktion
- Nummer des Vertragsunternehmens
- Freigabe-Code des Kreditkartenunternehmens, resp. des Rechenzentrums
- Eingegebener Rechnungsbetrag.

Zudem sind durch diese Art der Verbindung auch Zahlungen dann noch möglich, wenn die Online-Verbindung zwischen Vertragsunternehmen und Rechenzentrum nicht funktioniert, resp. gestört oder unterbrochen ist. Deshalb ist es von Vorteil, dass die Zahlung durch den Transaktionscode sichergestellt ist.

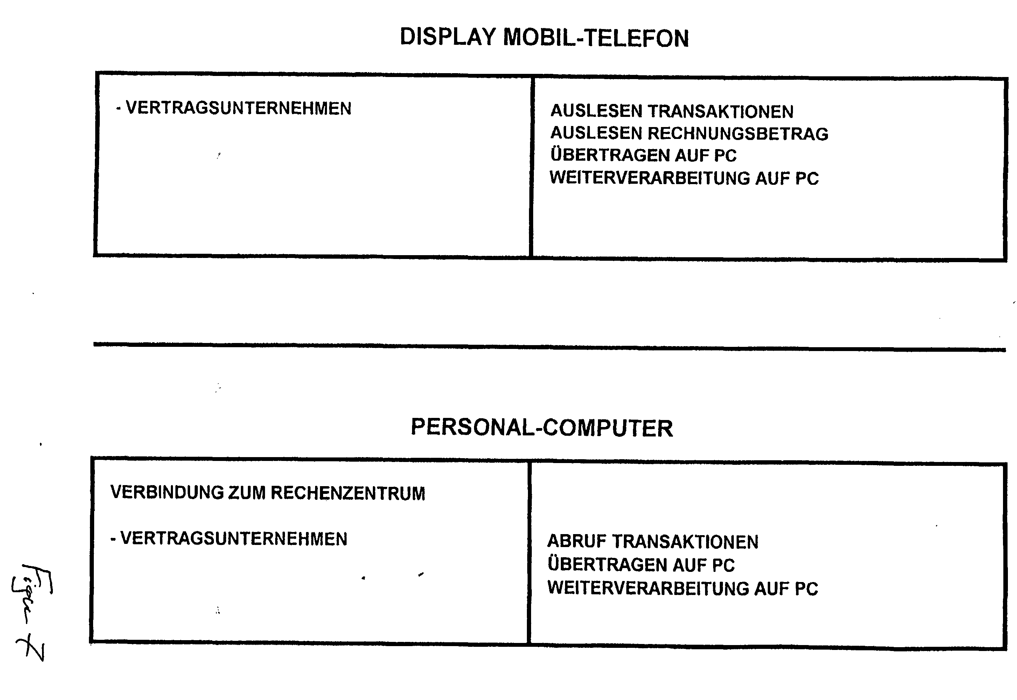

### Zahlung über eigenes Mobiltelefon bei Transaktionen im Internet gemäß der unteren Darstellung von Figur 7

Gerade bei Zahlungsaufforderung im Internet mittels Kreditkarten ist höchste Vorsicht angesagt, da der Kreditkarteninhaber die vitalen Daten seiner Karte herausgibt, ohne dafür die Gewähr zu haben, dass diese keinesfalls missbräuchlicher Verwendung zugeführt werden kann.

Deshalb ist es absolut sinnvoll, wenn die Zahlung mittels eines Codes sichergestellt ist, der vom Kreditkartenunternehmen an den Kreditkarteninhaber vorab übermittelt wurde.

Die Zahlung wird mit dem eigenen Mobiltelefon initiiert. Daher ist folgender Ablauf vorgesehen:
- Über die Wahl der Telefonnummer des Rechenzentrums aus dem integrierten SIM-Speicher sendet das Mobiltelefon die Kreditkartennummer des Kreditkarteninhabers an das Kreditkartenunternehmen, resp. Rechenzentrum
- Die Verbindung kommt zustande und das Rechenzentrum verlangt auf dem Mobiltelefon die Eingabe des PIN-Codes durch Kreditkarteninhaber sowie der Nummer des Vertragsunternehmens, für welches die Zahlung im Internet bestimmt ist
- Überprüfung und Freigabe der Informationen an den Kreditkarteninhaber
- Kreditkartenunternehmen sendet dann folgende Informationen zurück und zeigt diese auf dem Display des Mobiltelefons des Kreditkarteninhabers an:
   - Verfügbare und aktualisierte Kreditlimite des Karteninhabers
   - Transaktionscode 12-stellig (alpha-numerisch) als Bezahlungs-Freigabe
- Der Kreditkarteninhaber quittiert die Nummer des Vertragsunternehmens und tippt den Rechnungsbetrag auf sein Mobiltelefon ein und sendet diese Informationen an das Rechenzentrum zurück mit OK
- Alternativ wäre auch die zweite Eingabe eines PIN-Codes als zusätzliches Sicherheitsmerkmal denkbar und möglich
- Abschluss durch Rückmeldung des Kreditkartenunternehmens, resp. Rechenzentrums und quittieren der Transaktion mit OK auf dem Mobiltelefon
- Trennen der Verbindung.

Die Kommunikationskosten der Transaktion gehen zulasten des Kreditkarteninhabers oder des Vertragsunternehmens, sofern keine 0800-er Nummer eingesetzt werden kann.

Mit dieser Vorgehensweise wird verhindert, dass die Nummer des Kreditkarteninhabers jemals an das Vertragsunternehmen bekannt gegeben wird und eine weitere Verwendung dieser Informationen für Unberechtigte ausschließt, beispielsweise für missbräuchliche Einkäufe über das Internet, die lediglich diese Schlüsselinformationen zur Abwicklung benötigt.

Interessant ist diese Applikation insofern, als die Transaktionsinformationen auf dem SIM-Speicher abgelegt werden können und mittels IR oder Leser in den eigenen PC eingelesen, resp. übertragen werden können. Dabei handelt es sich um die folgenden Informationen:
- Datum und Uhrzeit der Transaktion
- Nummer des Vertragsunternehmens
- Freigabe-Code des Kreditkartenunternehmens, resp. des Rechenzentrums
- Eingegebener Rechnungsbetrag.

### Zahlung mit einem Mobiltelefon des Vertragsunternehmens

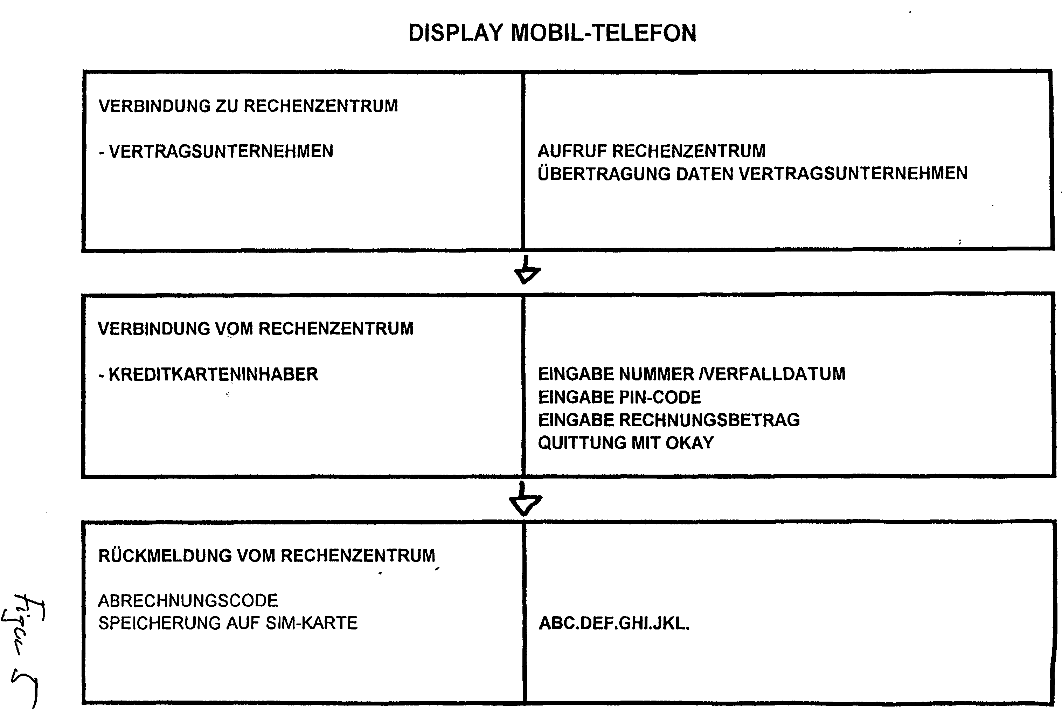

Bei der Zahlung mit dem Mobiltelefon des Vertragsunternehmens gemäß Figuren 5 bis 7 ist folgender Ablauf vorgesehen:
- Telefonnummer aus integriertem SIM-Speicher sendet Nummer des Vertragsunternehmens an Kreditkartenunternehmen, resp. Rechenzentrum
- Verbindung kommt zustande und verlangt die Eingabe der folgenden Informationen durch den Kreditkarteninhaber:
   - Informationen über den Kreditkarten-Inhaber, d.h. Kreditkarten-Nummer und Verfalldatum
   - PIN-Code durch den Kreditkarten-Inhaber
   - Rechnungsbetrag
- Übertragung der Daten an das Kreditkartenunternehmen, resp. Rechenzentrum
- Kreditkartenunternehmen, resp. Rechenzentrum sendet folgende Informationen zurück und zeigt diese auf dem Display an:
   - CODE 12-stellig (alpha-numerisch) als Bezahlungs-Freigabe, der auf den Beleg beim Vertragsunternehmen als Abrechnungsgrundlage übertragen und gleichzeitig auf der SIM-Karte gespeichert wird
- der Kreditkarteninhaber tippt als Freigabe des Rechnungsbetrages seinen PIN-Code zur Freigabe der Zahlung ein und sendet die Information an das Kreditkartenunternehmen, resp, Rechenzentrum
- Auf der SIM-Karte des lokalen Mobiltelefons verbleiben die folgenden Informationen:
   - Datum und Uhrzeit der Transaktion
   - Freigabe-Code des Kreditkartenunternehmens, resp. des Rechenzentrums
   - Eingegebener Rechnungsbetrag
   - Die Kreditkartennummer wird beim Vertragsunternehmen unter keinen Umständen registriert

Die Kommunikationskosten der Transaktion gehen zulasten des Vertragsunternehmens, sofern keine 0800-er Nummer eingesetzt werden kann.

Interessant ist diese Applikation insofern, als die Transaktionsinformationen auf dem SIM-Speicher abgelegt werden können und mittels IR oder Leser in den eigenen PC des Vertragsunternehmens eingelesen, resp. übertragen werden können. Dabei handelt es sich um die folgenden Informationen:
- Datum und Uhrzeit der Transaktion
- Freigabe-Code des Kreditkartenunternehmens, resp. des Rechenzentrums
- Eingegebener Rechnungsbetrag
- Die Kreditkartennummer wird beim Vertragsuntemehmen aber nicht registriert

Mit dieser Vorgehensweise wird auch hier verhindert, dass die sensitiven Informationen über den Kreditkarteninhaber an das Vertragsunternehmen bekannt gegeben werden und dadurch eine weitere Verwendung dieser Informationen für Unberechtigte ausschließt, beispielsweise für missbräuchliche Einkäufe über das Internet, die lediglich diese Informationen zur Auftragsabwicklung benötigt.

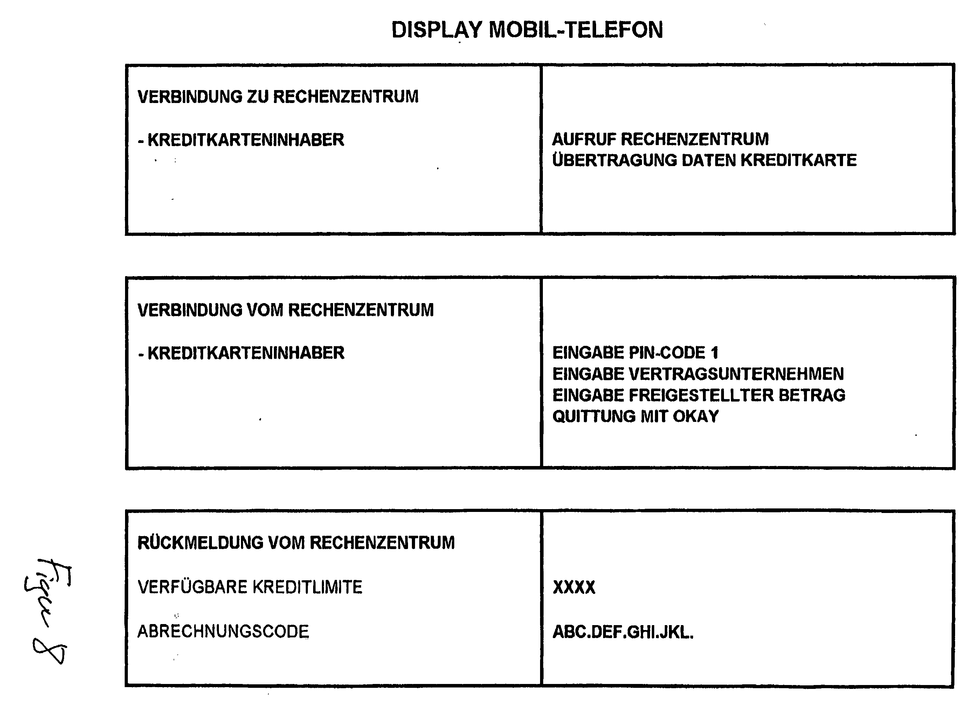

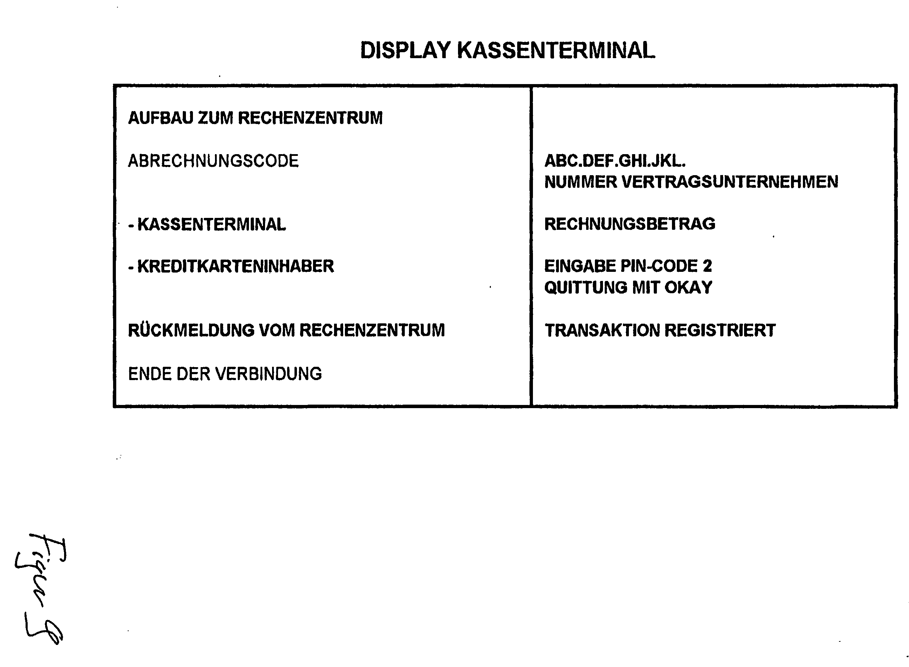

### Zahlung über eigenes Mobiltelefon, resp. Kassenterminal des Vertragsunternehmens bei verzögerter Bezahlung (z.B. Hotel) gemäß Figuren 8, 9

Beim Einchecken wird vom Gast verlangt, daß er die Daten seiner Kreditkarte an der Rezeption bekanntgibt, damit die Abrechnung später beim Auschecken ohne Verzug erfolgen kann. Gleichzeitig bedeutet dies für das Vertragsunternehmen auch eine Zahlungsgarantie.

Beim Einchecken ist mit dem eigenen Mobiltelefon folgender Ablauf zwingend vorgeschrieben:
- Telefonnummer aus integriertem SIM-Speicher sendet Kreditkartennummer des Kreditkarteninhabers an Kreditkartenunternehmen, resp. Rechenzentrum
- Verbindung kommt zustande und verlangt Eingabe des PIN-Codes durch Kreditkarteninhaber sowie der Nummer des Vertragsunternehmens, resp. eines Terminals, an welchem die Zahlungstransaktion später durchgefürht werden kann, sowie des vom Kreditkarteninhaber freigestellten Betrages für die spätere Bezahlung der Rechnung
- Überprüfung und Freigabe der Informationen an den Kreditkarteninhaber
- Kreditkartenunternehmen sendet dann folgende Information zurück und zeigt diese auf dem Display des Mobiltelefons des Kreditkarteninhabers an
   - Verfügbare und aktualisierte Kreditlimite des Karteninhabers (durch Rechenzentrum)
   - CODE 12-stellig (alphanumerisch) als Bezahlungsfreigabe
- Kreditkartenunternehmen sendet dann zusätzlich folgende Informationen an das Kassenterminal des Vertragsunternehmens
   - Gleichzeitige Sendung des CODE 12-stellig (alphanumerisch) als Bezahlungsfreigabe auf das Display des Vertragsunternehmens, resp. des Kassenterminals (aber vor allem ohne Kreditkartennummer oder Name des Kreditkarteninhabers)
   - Auf dem Display des Terminals erscheint ebenfalls der vom Kreditkarteninhaber freigestellte Rechnungsbetrag
- VARIANTE A: Der Kreditkarteninhaber quittiert die Nummer des Vertragsunternehmens und sendet diese Informationen an das Rechenzentrum zurück mit OK
- VARIANTE B: Alternativ kann dieser Vorgang aber auch über das Terminal erfolgen durch Eingabe des PIN-Codes + OK
- Alternativ wäre auch die zweite Eingabe eines PIN-Codes als zusätzliches Sicherheitsmerkmal denkbar und möglich
- Abschluß durch Rückmeldung des Kreditkartenunternehmens, resp. Rechenzentrums und Quittieren der Transaktion mit OK auf dem Mobiltelefon oder dem Kassenterminal
- Trennen der Verbindung

Beim Bezahlen und Auschecken ist folgender Ablauf vorgeschrieben:
- Vertragsuntemehmen baut Verbindung zum Kreditkartenunternehmen, resp. Rechenzentrum, auf anhand des gespeicherten Transaktionscodes und des übermittelten Rechnungsbetrages
- Kreditkartenunternehmen, resp. Rechenzentrum, sendet dann folgende Informationen zurück:
   - Bestätigung des Transaktionscodes und des registrierten Rechnungsbetrages
   - Auf dem Display des Terminals erscheint der Rechnungsbetrag
- Der Kreditkarteninhaber wird dann aufgefordert, die folgenden Informationen am Terminal einzugeben:
   - Rechnungsbetrag mit OK bestätigen (oder allenfalls korrigieren)
   - PIN-Code zur Freigabe der Transaktion eingeben
- Trennen der Verbindung

Die Kommunikationskosten der Transaktion gehen zulasten des Vertragsunternehmens.
- Rückmeldung des Rechenzentrums auf das Mobiltelefon des Kreditkarteninhabers mit folgenden Informationen:
   - Datum und Uhrzeit der Transaktion
   - Nummer des Vertragsunternehmens
   - Freigabe-Code des Kreditkartenunternehmens, resp. des Rechenzentrums
   - Eingegebener Rechnungsbetrag

Interessant ist dieser Applikation insofern, als die Transaktionsinformationen auf dem SIM-Speicher abgelegt werden können und mittels IR oder Leser in den eigenen PC eingelesen, resp. übertragen werden können.

Die Kommunikationskosten der Transaktion gehen zulasten des Kreditkarteninhabers.

Mit dieser Vorgehensweise wird verhindert, daß die Nummer des Kreditkarteninhabers jemals an das Vertragsunternehmen bekannt gegeben wird und eine weitere Verwendung dieser Informationen für Unberechtigte ausschließt, beispielsweise für mißbräuchliche Einkäufe über das Internet, die lediglich diese Schlüsselinformationen zur Abwicklung benötigt.

### Cash-Card

Die heutige Anwendung der sogenannten Cash-Card setzt voraus, dass diese an einer dafür eingerichteten Stelle, vorzugsweise bei der Bank, aufgeladen wird. Auf einem Speicher der Cash-Card wird dann der heruntergeladene Betrag gepeichert und bei jedem Zahlungsvorgang analog zu einer Barzahlung entsprechend verringert. Die Cash-Card stellt somit eine Art elektronischer Geldbörse dar, die über Terminals aufgeladen werden kann.

In Zukunft wird es aber möglich sein, diese Cash-Card zuhause mittels Telebanking-Funktion (Abwicklung von Bankgeschäften über eine Online-Verbindung) aufzuladen. Voraussetzung hierfür ist eine Lese-/Schreibeinheit (Klasse 3) und ein entsprechender Vertrag mit der Bank, die auch die entsprechende Software anbietet.

Da diese Cash-Card ohnehin sämtlich Identifikationsmerkmale des Kontoinhabers aufweist, und die Lese-/Schreibeinheit die Sicherheitsanforderungen der Banken vollumfänglich erfüllt, muss die Kommunikation über eine Festnetzverbindung hergestellt werden.

Bei der Ausführung ist daher folgender Ablauf vorgesehen:
- Cash-Card in Lese-/Schreibeinheit einführen
- Lesen des verbleibenden Betrages auf der Cash-Card
- Aufbau Kommunikation mit der Bank
- Vertragsnummer wird aus Cash-Card gelesen und zur Bank bzw. dem zugeordneten Rechenzentrum übertragen
- ein Schlüssel ("Security-Key") wird aus Cash-Card gelesen und übertragen
- Eingabe eines PIN-CODE über eine Tastatur der Lese-/Schreibeinheit
- Eingabe des auf die Cash-Card zu ladenden Betrages
- Übertragung des Betrages auf die Cash-Card
- Lesen des vorhandenen Betrages auf der Cash-Card
- Trennen der Verbindung
- Cash-Card aus der Lese-/Schreibeinheit herausnehmen.

Diese Applikation wird in Zukunft auch die Kundenbindung verstärken können, indem eigene Cash-Cards von Firmen herausgegeben werden, die mit kundenspezifischen Zusätzen versehen werden können. Als Beispiel ist eine Cash-Card denkbar, bei der auch das Foto des Inhabers angebracht werden kann. Die Kinder können sich von den Erwachsenen den entsprechenden Betrag auf die Karte laden lassen und bargeldlos konsumieren.

### Transaktionsüberwachung

Mit einer Lese-/Schreibeinheit der Klasse 3 in Verbindung mit einem PC ist es auch jederzeit möglich, über das Internet die gesamten Transaktionen aktualisiert auf den eigenen PC herunterzuladen.

Bei der Ausführung ist folgender Ablauf vorgesehen:
- Kreditkarte in Lese-/Schreibeinheit einführen
- Aufbau einer Kommunikation zu dem Rechenzentrum des Kreditkartenunternehmens
- Kreditkartennummer wird durch die Lese-/Schreibeinheit gelesen und zum Rechenzentrum übertragen
- Ein Schlüssel ("Security-Key") wird aus der Kreditkarte gelesen und zum Rechenzentrum übertragen
- Eingabe eines PIN-CODE über eine Tastatur der Lese-/Schreibeinheit
- Dialog gemäß Bildschirmaufforderung (z.B. Datum von - bis)
- Download Transaktionen
- Trennen der Verbindung
- Kreditkarte aus der Lese-/Schreibeinheit herausnehmen.

Die Weiterverarbeitung erfolgt über entsprechende Anwenderprogramme.

## Patentansprüche

1. Verfahren zur elektronischen Abwicklung von Zahlungstransaktionen unter Zuhilfenahme eines Mobilterminals (1),
aufweisend die folgenden Schritte:
- Übersendung einer Zahlungsanfrage von dem Mobilterminal (1) zu einer Zahlungs-Abwicklungszentrale (6),
- Übersendung der gewünschten Zahlungsmodalitäten der Zahlungstransaktion von dem Mobilterminal (1) zu der Zahlungs-Abwicklungszentrale (6), wobei die Zahlungsmodalitäten Kreditkarten-Informationen enthalten,
wobei für die Kommunikation zwischen dem Mobilterminal (1) und der Zahlungs-Abwicklungszentrale (6) zumindest teilweise ein Datenkanal oder ein Signalisierungskanal einer Luftschnittstelle (3) verwendet wird,
- Zuweisung eines individuellen, die jeweilige Zahlungstransaktion identifizierenden Transaktionscodes oder Freigabecodes durch die Zahlungs-Abwicklungszentrale (6),
**dadurch gekennzeichnet,**
- **dass** der individuelle Transaktionscode oder Freigabecode zu dem Terminal (8) eines Zahlungsadressaten übermittelt wird, und
- **dass** die Kreditkarten-Nummer an dem Terminal (8) des Zahlungsadressaten für die Ausführung der Zahlungstransaktion nicht vorliegt.

2. Verfahren nach Anspruch 1,
**dadurch gekennzeichnet,**
**dass** der individuelle Transaktionscode oder Freigabecode zu dem Mobilterminal (1) übermittelt wird.

3. Verfahren nach Anspruch 1 oder 2,
**dadurch gekennzeichnet,**
**dass** die Kommunikation zwischen dem Mobilterminal (1) und der Zahlungs-Abwicklungszentrale (6) zumindest teilweise mittels des SMS-Dienstes des GSM-Standards erfolgt.

4. Verfahren nach einem der vorhergehenden Ansprüche,
**dadurch gekennzeichnet,**
**dass** bei der Kommunikation zwischen dem Mobilterminal (1) und der Zahlungs-Abwicklungszentrale (6) aus einem Speicher (2) in dem Mobilterminal (1) ausgelesene Daten verwendet werden.

5. Verfahren nach Anspruch 4,
**dadurch gekennzeichnet,**
**dass** die Daten aus einer SIM-Karte (2) ausgelesen werden.

6. Verfahren nach einem der vorhergehenden Ansprüche,
**dadurch gekennzeichnet,**
**dass** die Kreditkarten-Informationen manuell in das Mobilterminal (1) eingegeben werden.

7. Verfahren nach einem der vorhergehenden Ansprüche,
**dadurch gekennzeichnet,**
**dass** die Kommunikation zwischen dem Mobilterminal (1) und der Zahlungs-Abwicklungszentrale (6) verschlüsselt erfolgt.

8. Verfahren nach einem der vorhergehenden Ansprüche,
**dadurch gekennzeichnet,**
**dass** nach Zahlungsabwicklung Informationen bezüglich der Transaktion in einem Speicher (2) des Mobilterminals (1) abgelegt werden.

9. Verfahren nach Anspruch 8,
**dadurch gekennzeichnet,**
**dass** die Transaktions-Informationen durch einen autorisierten Benutzer des Mobilterminals (1) ausgelesen und/oder zu einem anderen Gerät übertragen werden können.

10. Verfahren nach einem der vorhergehenden Ansprüche,
**dadurch gekennzeichnet,**
**dass** die Bestätigung der Zahlungsabwicklung zu einem Kassenterminal (9) ausgegeben wird.

11. Verfahren nach einem der vorhergehenden Ansprüche,
**dadurch gekennzeichnet,**
**dass** die Übermittlung des Transaktionscodes die Freigabe der Zahlungsabwicklung darstellt.

12. Verfahren nach einem der vorhergehenden Ansprüche,
**dadurch gekennzeichnet,**
**dass** die Zahlung gemäß der Zahlungsmodalitäten unverzüglich oder zeitversetzt ausgeführt wird.

13. Computer-Programm, umfassend Programmabschnitte, die dazu geeignet sind, wenn diese Programmabschnitte auf einem Datenverarbeitungssystem ausgeführt werden, die Verfahrensabschnitte gemäß einem der vorhergehenden Ansprüche durchzuführen.

14. Verfahren zur elektronischen Abwicklung von Zahlungstransaktionen unter Zuhilfenahme eines Mobilterminals (1) und eines Terminals (9) eines Zahlungsadressaten,
aufweisend die folgenden Schritte:
- Übersendung einer Zahlungsanfrage von dem Mobilterminal (1) zu einer Zahlungs-Abwicklungszentrale (6),
- Übersendung der gewünschten Zahlungsmodalitäten der Zahlungstransaktion von dem Terminal (9) des Zahlungsadressaten zu der Zahlungs-Abwicklungszentrale (6), wobei die Zahlungsmodalitäten Kreditkarten-Informationen enthalten,
wobei für die Kommunikation zwischen dem Mobilterminal (1) und der Zahlungs-Abwicklungszentrale (6) zumindest teilweise ein Datenkanal oder ein Signalisierungskanal einer Luftschnittstelle (3) verwendet wird,
- Zuweisung eines individuellen, die jeweilige Zahlungstransaktion identifizierenden Transaktionscodes oder Freigabecodes durch die Zahlungs-Abwicklungszentrale (6),
**dadurch gekennzeichnet,**
- **dass** der individuelle Transaktionscode oder Freigabecode zu dem Mobilterminal (1) und/oder dem Terminal (9) des Zahlungsadressaten übermittelt wird, und
- **dass** die Kreditkarten-Nummer an dem Terminal (9) des Zahlungsadressaten für die Ausführung der Zahlungstransaktion nicht vorliegt.

## Claims

1. Method for the electronic processing of payment transactions by means of a mobile terminal (1),
having the following steps.
- transmission of a payment inquiry from the mobile terminal (1) to a payment processing centre (6),
- transmission of the desired modes of payment for the payment transaction from the mobile terminal (1) to the payment processing centre (6), whereby the modes of payment contain credit card information,
whereby for communication between the mobile terminal (1) and the payment processing centre (6) a data channel or a signaling channel of an air interface (3) is used at least partly,
- assignment of an individual transaction code, identifying the respective payment transaction or release code by the payment processing centre (6), **characterized in**
- **that** the individual transaction code or release code is conveyed to the terminal (8) of a payment addressee, and
- **that** the credit card number is not available at the terminal (8) of the payment addressee for execution of the payment transaction.

2. Method according to claim 1, **characterized in that** the individual transaction code or release code is conveyed to the mobile terminal (1).

3. Method according to claim 1 or 2, **characterized in that** communication takes place between the mobile terminal (1) and the payment processing centre (6) at least partly by means of the SMS service of the GSM standard.

4. Method according to any one of the preceding claims, **characterized in that** during communication between the mobile terminal (1) and the payment processing centre (6) data selected from a memory (2) in the mobile terminal (1) are used.

5. Method according to claim 4, **characterized in that** the data are selected from a SIM card (2).

6. Method according to any one of the preceding claims, **characterized in that** the credit card information is entered manually in the mobile terminal (1).

7. Method according to any one of the preceding claims, **characterized in that** communication takes place in a coded way between the mobile terminal (1) and the payment processing centre (6).

8. Method according to any one of the preceding claims, **characterized in that** after the payment transaction information concerning the transaction is stored in a memory (2) of the mobile terminal (1).

9. Method according to claim 8, **characterized in that** the transaction information can be selected by an authorized user of the mobile terminal (1) and/or transferred to other equipment.

10. Method according to any one of the preceding claims, **characterized in that** confirmation of the payment transaction is sent to a cash terminal (9).

11. Method according to any one of the preceding claims, **characterized in that** the transmission of the transaction code represents the release of the payment transaction.

12. Method according to any one of the preceding claims, **characterized in that** according to the modes of payment, payment is executed immediately or deferred.

13. Computer program, comprising program segments, which if these program segments are carried out on a data processing system are suitable for executing the procedural steps in accordance with any one of the preceding claims.

14. Method for the electronic processing of payment transactions by means of a mobile terminal (1) and a terminal (9) of a payment addressee,
having the following steps:
- transmission of a payment inquiry from the mobile terminal (1) to a payment processing centre (6),
- transmission of the desired modes of payment for the payment transaction from the terminal (9) of the payment addressee to the payment processing centre (6), whereby the modes of payment contain credit card information,
whereby for communication between the mobile terminal (1) and the payment processing centre (6) a data channel or a signaling channel of an air interface (3) is used at least partly,
- assignment of an individual transaction code, identifying the respective payment transaction or release code by the payment processing centre (6), **characterized in**
- **that** the individual transaction code or release code is conveyed to the mobile terminal (1) and/or the terminal (9) of the payment addressee, and
- **that** the credit card number is not available at the terminal (9) of the payment addressee for execution of the payment transaction.

## Revendications

1. Procédé de réalisation électronique de transactions à l'aide d'un terminal mobile (1), comprenant les étapes suivantes :
- envoi d'une demande de paiement du terminal mobile (1) vers une centrale de paiement (6),
- envoi des modalités de paiement souhaitées de la transaction du terminal mobile (1) vers la centrale de paiement (6), moyennant quoi les modalités de paiement contiennent les informations sur la carte de crédit,
moyennant quoi, pour la communication entre le terminal mobile (1) et la centrale de paiement (6), un canal de données ou un canal de signalisation d'une interface aérienne (3) est utilisé au moins partiellement,
- attribution d'un code de transaction individuel ou d'un code d'autorisation individuel identifiant la transaction par la centrale de paiement (6),
**caractérisé en ce que**
- le code de transaction individuel ou code d'autorisation individuel est transmis vers le terminal (8) d'un destinataire de paiement, et
- le numéro de carte de crédit n'est pas présent sur le terminal (8) du destinataire du paiement pour la réalisation de la transaction.

2. Procédé selon la revendication 1, **caractérisé en ce que** le code de transaction individuel ou code d'autorisation individuel est transmis au terminal mobile (1).

3. Procédé selon la revendication 1 ou 2, **caractérisé en ce que** la communication entre le terminal mobile (1) et la centrale de paiement (6) est réalisée au moins partiellement à l'aide d'un service SMS de la norme GSM.

4. Procédé selon l'une des revendications précédentes, **caractérisé en ce que**, lors de la communication entre le terminal mobile (1) et la centrale de paiement (6), des données lues dans une mémoire (2) du terminal mobile (1) sont utilisées.

5. Procédé selon la revendication 4, **caractérisé en ce que** les données sont lues dans une carte SIM (2).

6. Procédé selon l'une des revendications précédentes, **caractérisé en ce que** les informations sur la carte de crédit sont entrées manuellement dans le terminal mobile (1).

7. Procédé selon l'une des revendications précédentes, **caractérisé en ce que** la communication entre le terminal mobile (1) et la centrale de paiement (6) est cryptée.

8. Procédé selon l'une des revendications précédentes, **caractérisé en ce qu'**après le déroulement du paiement, les informations concernant la transaction sont enregistrées dans une mémoire (2) d'un terminal mobile (1).

9. Procédé selon la revendication 8, **caractérisé en ce que** les informations concernant la transaction peuvent être lues et/ou transmises à un autre appareil par un utilisateur autorisé du terminal mobile (1).

10. Procédé selon l'une des revendications précédentes, **caractérisé en ce que** la confirmation du paiement est envoyée à un terminal de caisse (9).

11. Procédé selon l'une des revendications précédentes, **caractérisé en ce que** la transmission du code de transaction constitue l'autorisation du paiement.

12. Procédé selon l'une des revendications précédentes, **caractérisé en ce que** le paiement selon les modalités de paiement est réalisé immédiatement ou de manière différée.

13. Programme informatique comprenant des parties de programme qui permettent, lorsque ces parties de programme sont effectuées sur un système de traitement des données, de réaliser les parties du procédé selon l'une des revendications précédentes.

14. Procédé de réalisation électronique de transactions à l'aide d'un terminal mobile (1) et d'un terminal (9) d'un destinataire de paiement , comprenant les étapes suivantes :
- envoi d'une demande de paiement du terminal mobile (1) vers une centrale de paiement (6),
- envoi des modalités de paiement souhaitées de la transaction du terminal (9) du destinataire du paiement vers la centrale de paiement (6), moyennant quoi les modalités de paiement contiennent des informations sur la carte de crédit,
moyennant quoi, pour la communication entre le terminal mobile (1) et la centrale de paiement (6), un canal de données ou un canal de signalisation d'une interface aérienne (3) est utilisé au moins partiellement,
- attribution d'un code de transaction individuel ou d'un code d'autorisation individuel identifiant la transaction par la centrale de paiement (6),
**caractérisé en ce que**
- le code de transaction individuel ou code d'autorisation individuel est transmis vers le terminal mobile (1) et/ou le terminal (9) d'un destinataire de paiement, et
- le numéro de carte de crédit n'est pas présent sur le terminal (9) du destinataire du paiement pour la réalisation de la transaction.
